# EUROPÄISCHE PATENTSCHRIFT

(11) **EP 2 543 474 B1**
(45) Veröffentlichungstag und Bekanntmachung des Hinweises auf die Patenterteilung: **12.03.2014**
(21) Anmeldenummer: 12005004.2
(22) Anmeldetag: 05.07.2012
(51) Int. Cl.: B23Q 39/04

(54) **Rundtaktmaschine**
Rotary machine
Machine de cadencement

(30) Priorität: 08.07.2011 DE 102011107467
(43) Veröffentlichungstag der Anmeldung: 09.01.2013
(73) Patentinhaber: Ingenieursbüro IKS Neufeld, 72527 Schwäbisch Gmünd (DE)
(72) Erfinder: Neufeld, Benno, 73553 Alfdorf (DE)
(74) Vertreter: Behrens, Helmut

(56) Entgegenhaltungen:
- EP-A2- 0 407 794
- DE-A1- 4 111 547

## Beschreibung

Die Erfindung betrifft eine Rundtaktmaschine gemäß dem Oberbegriff des Patentanspruchs 1. Eine solche Maschine ist aus dem Patentdokument EP-A-0 407 794 bekannt.

Rundtaktmaschinen werden in der Industrie als Werkzeug- oder Montagemaschinen eingesetzt, die entlang eines Rundschalttisches, eines Rundtellers oder einer Rundscheibe Werkstücke bearbeiten oder Teile montieren. Dabei taktet der Rundschaltteller, der Rundschalttisch oder die Rundschaltscheibe von einer Bearbeitungs- oder Montagestation zur nächsten bis nach höchstens einem Umlauf der vorgesehene Bearbeitungs- oder Montagevorgang fertiggestellt ist. Dabei sind Bearbeitungs- und Montagemaschinen mit mindestens zwei und bis ca. 24 Stationen gebräuchlich, die mit Elektro- oder Servomotoren angetrieben oder gesteuert werden. Die Rundschalttische, die Rundschaltteller oder die Rundschaltscheiben, sowie die Bearbeitungs- oder Montagestationen können dabei unterschiedlich angetrieben und gesteuert werden. Ursprünglich wurde der getaktete Vorschub des Rundschaltisches, des Rundschalttellers oder der Rundtaktscheibe mechanisch durch Kurvengetriebe angetrieben und gesteuert, während heute bei Rundtaktmaschinen auch häufig nummerische Antriebe und Steuerungen (CNC) eingesetzt werden, die oft flexibler steuerbar sind. Beide Steuerungsarten werden heute parallel nebeneinander eingesetzt, wobei die kurvengesteuerte Rundtaktmaschine sehr schnelle Taktfolgen von bis zu 60 Takten pro Minute ermöglicht. Dabei können je nach Dauer der Bearbeitung oder der Montage bis zu 60 Werkstücke oder Montageteile pro Minute auf einer Rundtaktmaschine fertiggestellt werden.

Aus der DE 41 11 547 A1 ist ein Rundtaktautomat bekannt, der zur automatischen Montage und Bearbeitung von Werkstücken vorgesehen ist. Dieser weist ein Maschinengestell auf, an dem ein horizontaler Rundschaltteller angeordnet ist. An diesem Rundschaltteller ist ein maschinenfester Träger befestigt, der einen drehbaren runden Drehteller enthält. Am maschinenfesten Träger sind oberhalb des Drehtellers 8 bis 32 Arbeitseinheiten sternförmig angeordnet, die zur Montage oder Bearbeitung der Werkstücke ausgebildet sind. Für jeden Bearbeitungs- oder Montagezyklus wird der Drehteller zu einer Arbeitseinheit weitergedreht. Dazu ist im Maschinengestell ein Antriebsmechanismus befestigt, das ein Schrittgetriebe enthält, das über ein Kurvenrad und ein Sternrad den Drehteller bei jedem Zyklus eine Arbeitsstation weiterdreht. Dabei ist das Kurvenrad so gestaltet, dass während des Bearbeitungszyklusses die Drehscheibe in Ruhestellung gehalten wird. Anschließend greift das Kurvenrad wieder in das Sternrad ein und dreht dies einen weiteren Drehschritt zur nächsten Arbeitsstation. Durch die schrittweise Weiterdrehung des Drehtellers durch das Schrittgetriebe wird sowohl die Antriebsmasse des Drehtellers als auch die damit verbundene Drehwelle und der Werkstückhalter als auch das Werkstück selbst kurzfristig stark beschleunigt und wieder abgebremst, wobei bis zur Bearbeitung gewisse Ausschwingzeiten eingehalten werden müssen. Dadurch bedingt können derzeit auch bei geringen Bearbeitungs- oder Montagezeiten nur Taktraten von 80 Takten pro Minute kaum überschritten werden.

Der Erfindung liegt deshalb die Aufgabe zugrunde, eine Rundtaktmaschine zu schaffen, die weitaus höhere Taktraten ermöglicht.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, dass durch die umlaufende Kurvenscheibe als Rundelement mit seinen Steuerkurvenelementen nur eine sich kontinuierlich gering verändernde Beschleunigungswirkung der getakteten Werkstückaufnahmen auftritt, mit der bei einer Rundtaktmaschine die bisher höchsten Taktraten von 80 Takten pro Minute auf bis zu Taktraten von bis zu 250 Bearbeitungstakten pro Minute erhöhbar sind. Dabei hat insbesondere das drehbar um die Maschinenachse angetriebene Rundelement den Vorteil, dass dies als flache Kurvenscheibe ausbildbar ist, in der die Steuerkurvenelemente leicht integrierbar sind. Die an dem Rundelement angeordneten Steuerkurvenelemente haben dabei den Vorteil, dass dadurch mehrere Lagerelemente einer Werkstückaufnahme so geführt werden können, dass sie auch bei rotierendem Rundelement stillstehen oder sich um eine gemeinsame Drehachse drehen und dadurch die Werkstückaufnahme taktweise um die Maschinenachse bewegen. Durch einen derartig gesteuerten Antrieb können sanft ansteuernde Bewegungs- und Stillsetzungsvorgänge der Werkstückaufnahmen rund um die Maschinenachse erfolgen, so dass ein weitgehend kontinuierlicher erschütterungsfreier Bewegungsablauf der taktweise gesteuerten Werkzeugaufnahmen möglich ist und dies bei sehr hohen Taktraten, weil diese wie eine Welle um die Maschinenachse kreisen.

Die Erfindung hat weiterhin den Vorteil, dass mit nur einem Rundelement gleichzeitig eine Vielzahl von zum Beispiel zwei bis 32 stern- oder planetenförmig um die Maschinenachse angeordnete Werkstückaufnahmen und Bearbeitungsstationen gesteuert und angetrieben werden können. Dabei kann die Rundtaktmaschine je nach Ausführung der Bearbeitungsstationen vorteilhafterweise sowohl als Werkzeugmaschine als auch als Montagemaschine ausgeführt sein.

Eine Rundtaktmaschine mit einem derartigen Rundelement hat gleichzeitig den Vorteil, dass dies bei einer besonderen Ausführungsart der Erfindung noch mit zusätzlichen Steuerelementen versehen oder gekoppelt werden kann, mit denen eine Bearbeitungs- oder Montagestation sowohl in mindestens einer vertikalen und einer horizontalen Bewegungsrichtung je nach Bedarf auch gleichzeitig antreibbar ist. Dabei ist insbesondere vorteilhaft, dass nur ein Antrieb des Rundelements ausreicht, mit dem sowohl die Werkstückaufnahmen als auch die Bearbeitungs-oder Montagestationen synchron und dadurch mit hoher Taktgeschwindigkeit betrieben werden können.

Eine weitere besondere Ausführungsart der Erfindung mit mindestens einem weiteren Steuerelement an dem Rundelement oder einem mit dem Rundelement gekoppelten rotierbaren Maschinenteil hat den Vorteil, dass damit gleichzeitig auch eine Vereinzelungseinrichtung steuerbar angetrieben werden kann, was gleichzeitig eine hohe Taktgeschwindigkeit gewährleistet. Dies hat zusätzlich den Vorteil, dass dies auch mit dem zentralen Antrieb des Rundelements erfolgen kann.

Die Erfindung wird anhand eines Ausführungsbeispiels, das in der Zeichnung dargestellt ist, näher erläutert. Es zeigen:
- Fig. 1:: eine Seitenansicht einer schematisch dargestellten Rundtaktmaschine;
- Fig. 2:: eine Draufsicht einer schematisch dargestellten Rundtaktmaschine;
- Fig. 3:: eine Seitenansicht eines Teils einer Rundtaktmaschine, und
- Fig. 4:: neun Taktdarstellungen einer Umdrehung eines Rundschaltrings.

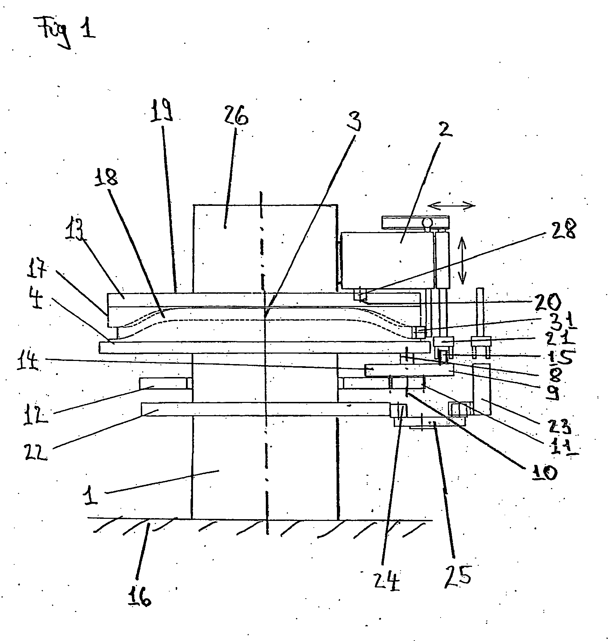

In Fig. 1 der Zeichnung ist eine Rundtaktmaschine schematisch dargestellt, die ein ortsfestes Maschinengestell 1 und eine daran befestigte Bearbeitungsstation 2 enthält, wobei symmetrisch zur vertikalen Maschinenachse 3 mindestens eine drehbar angetriebene Kurvenscheibe 4 als Rundelement angeordnet ist, in den drei Steuerkurvenelemente 5, 6, 7 eingelassen und in diesen drei Lagerelemente 8 einer Werkstückaufnahme 9 geführt sind, wobei um die Drehachse 10 der Werkstückeaufnahme 9 ein kleines Zahnrad 11 angeordnet ist, das mit einem am Maschinengestell befestigten großen Zahnrad 12 kämmend verbunden ist.

Bei der Rundtaktmaschine handelt es sich um eine Montagemaschine mit einer horizontalen oder liegenden Werkstückaufnahme 9, auf der in einem Rundlauf um die vertikale Maschinenachse 3 die Werkstücke durch die vorgesehenen Bearbeitungsstationen 2 montiert werden. Die Rundtaktmaschine kann aber auch als Werkzeugmachine ausgebildet sein, bei der bei einem Umlauf die auf der Werkstückaufnahme angeordneten Werkstücke zum Beispiel durch Drehen, Bohren oder Fräsen bearbeitet werden. Dabei enthält die Rundtaktmaschine ein ortsfestes Maschinengestell 1, das vorzugsweise auf einem ebenen Fundament 16 befestigt ist. Am Maschinengestell 1 ist ein runde flache ringförmige Kurvenscheibe 4 als Rundelement angeordnet, die drehbar am Maschinengestell 1 gelagert ist. Die Kurvenscheibe 4 dreht kontinuierlich zentrisch um die Maschinenachse 3 von Bearbeitungsstation 2 zu Bearbeitungsstation 2, so dass das zu bearbeitende Werkstück nach einer Umdrehung fertig bearbeitet ist. Dazu sind je nach Bearbeitungsumfang vorzugsweise vier bis 32 Bearbeitungsstationen 2 sternförmig um die Maschinenachse 3 vorgesehen, wobei die vorstehende Rundtaktmaschine vorzugsweise acht Bearbeitungsstationen 2 aufweist.

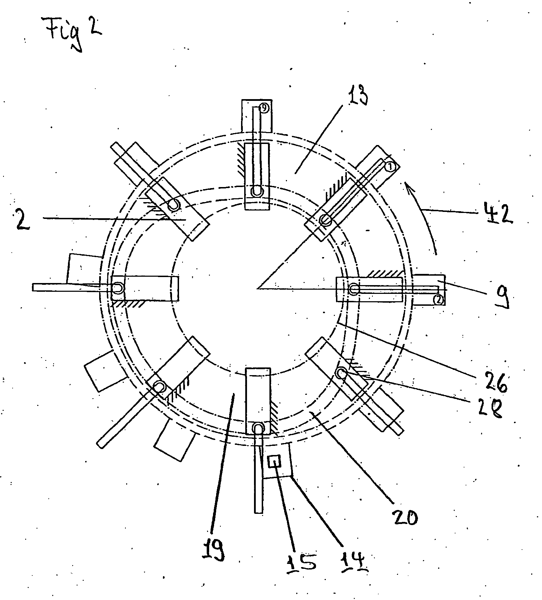

Die Rundtaktmaschine mit den Bearbeitungsstationen 2 und den Werkstückaufnahmen 9 ist im einzelnen in Fig. 2 der Zeichnung näher dargestellt. Die Kurvenscheibe 4 der Rundtaktmaschine, der auch als Rundschalttisch, Rundschaltteller oder als Rundscheibe ausgebildet sein kann, wird vorzugsweise mit einem im Maschinengestell 1 befestigten nicht dargestellten Elektromotor angetrieben, wobei der Rundschaltring 4 mit einer Drehzahl von vorzugsweise 120 Umdrehungen pro Minute umläuft. Die Kurvenscheibe 4 kann bei Bedarf aber auch mit Drehzahlen von 80 bis 150 Umdrehungen pro Minute angetrieben werden.

Unterhalb der Kurvenscheibe 4 sind planetenförmig neun Werkstückaufnahmen 9 angeordnet, die vorzugsweise eine flache horizontale runde oder rechteckige Platte als Werkstückaufnahmeelement 14 enthalten, auf denen die zu bearbeitenden Werkstücke 15 fixierbar sind. Die Werkstückaufnahmen 9 enthalten zusätzlich drei vertikale Lagerelemente 8, die mit der Kurvenscheibe 4 beweglich verbunden und in dessen Steuerkurvenelementen 5, 6, 7 drehbar gelagert sind. Dabei werden die Werkstückaufnahmen 9 durch die rotierende Kurvenscheibe 4 drehbar angetrieben und dadurch von Bearbeitungsstation 2 zu Bearbeitungsstation 2 transportiert. Dazu ist unterhalb der Werkstückaufnahmeplatte 14 als Werkstückaufnahmeelement der Werkstückaufnahme 9 ein zentrisch befestigtes kleines Zahnrad 11 als Antriebsrad angeordnet, das in ein am Maschinengestell 1 ortsfest befestigtes großes Zahnrad 12 als gestellfestes Maschinenteil kämmend eingreift. Das große Zahnrad 12 ist dabei koaxial umlaufend zur Maschinenachse 3 am Maschinengestell 1 angeordnet.

Oberhalb der Kurvenscheibe 4 ist noch ein am Maschinengestell 1 drehbar gelagerter Bearbeitungssteuerring 13 angeordnet, der mit der Kurvbenscheibe 4 fest verbunden ist und mit diesem synchron umläuft. In diesem Bearbeitungssteuerring 13 ist auf der äußeren Mantelfläche 17 als vertikale Umfangsfläche eine erste Kurvennut 18 als vertikales erstes Steuerelement für den vertikalen Bewegungsantrieb der Bearbeitungsstationen 2 eingelassen. Zusätzlich ist auf der Deckfläche 19 noch eine zweite Steuerkurve 20 als horizontales erstes Steuerelement zum horizontalen Bewegungsantrieb der Bearbeitungsstationen 2 eingelassen, um zu jedem Taktzeitpunkt jeweils auf der Werkstückaufnahme 9 den vorgesehenen Montageschritt ausführen zu können. Dazu ist an jeder Bearbeitungsstation 2 zusätzlich noch ein Montageelement 21 angeordnet, dass vorzugsweise als Greifer ausgebildet ist, der ein Montageteil einsetzt oder am Werkstück 15 befestigt.

Desweiteren enthält die Rundtaktmaschine unterhalb des großen Zahnrades 12 ein drehbar am Maschinengestell 1 gelagerten Kurvenscheibenring 22 zur Vereinzelung der herantransportierten Werkstückteile. Dieser Kurvenscheibenring 22 läuft synchron mit der Kurvenscheibe 4 um und überträgt die Kurvenbewegung mittels seiner äußeren Ringfläche auf eine unterhalb der Bearbeitungsstation 2 angeordnete Vereinzelungsstation 23. Dabei tastet eine Andrückrolle 24 als zweites horizontales Steuerelement den äußeren Kurvenrand des Kurvenscheibenrings 22 ab und überträgt die Rundlaufabweichung der Kurve auf einen Hebelarm 25, der die angeforderten Bauteile unterhalb des Greiferarms 21 verschiebt, damit dieser das vorgesehene Bauteil auf die Werkstückaufnahme 9 auflegen kann.

In Fig. 2 der Zeichnung ist die Rundtaktmaschine schematisch in Draufsicht dargestellt, aus der die sternförmig angeordneten acht Bearbeitungsstationen 2 und die neun planetenartig vorgesehenen Werkstückaufnahmen 9 ersichtlich sind. Dabei enthält die Rundtaktmaschine im Zentrum eine runde feststehende Gestellsäule 26 als Teil des Maschinengestells 1. An die diese Gestellsäule 26 sind im Winkelabstand von 45° acht Bearbeitungsstationen 2 sternförmig befestigt, die nacheinander von den neun Werkstückaufnahmen 9 planetenartig unterlaufen werden, wobei diese für den Zeitraum der Bearbeitung unter jeder Bearbeitungsstation 2 stillstehen. Dabei erfolgt der rotatorisch getaktete Antrieb und der Zeitraum des Stillstands durch die mit den Steuerkurvenelementen 5, 6, 7 versehenen und rotierenden Kurvenscheibe 4. Diese rotiert synchron mit einem aus der Draufsicht erkennbaren Bearbeitungssteuerring 13, auf dessen Deckfläche 19 eine zweite Kurvennut 20 als horizontales erstes Steuerelement ersichtlich ist, die die radiale Horizontalbewegung der Bearbeitungsstationen 2 antreibt und während der Umlaufbahn steuert.

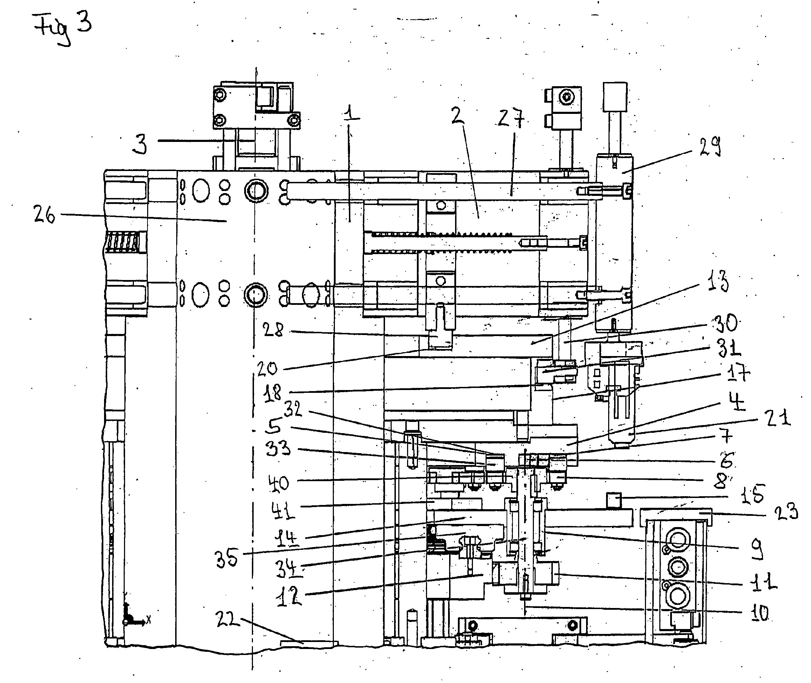

In Fig. 3 der Zeichnung ist ausschnittsmäßig ein Teil der Rundtaktmaschine in Seitenansicht dargestellt, aus der insbesondere eine Werkstückaufnahme 9 unterhalb einer Bearbeitungsstation 2 ersichtlich ist. Dabei ist an dem oberen Teil der zentralen Gestellsäule 26 radial auskragend die Bearbeitungsstation 2 befestigt, die über zwei vertikal übereinander angeordnete Horizontalarme 27 radial verschieblich gelagert ist. Dazu wird die Bearbeitungsstation 2 mit einer vertikalen Lagerrolle 28 in der zweiten Kurvennut 20 des Bearbeitungssteuerrings 13 geführt. Zusätzlich ist am Bearbeitungskopf 29 der Bearbeitungsstation 2 ein Vertikalarm 30 angeordnet, an dessen unterem Ende eine horizontale Lagerrolle 31 befestigt ist, die in der ersten Kurvennut 18 als vertikales erstes Steuerelement geführt wird. Dadurch kann der Bearbeitungskopf 29 vertikal verschiebbar gesteuert werden, um auf der Werkstückaufnahme 9 Montage- oder Greifervorgänge auszuführen. Da der rotierende Bearbeitungssteuerring 13 durch seine beiden Kurvennuten 18, 20 den Bearbeitungskopf 29 sowohl horizontal als auch vertikal bewegen kann, ist der Bearbeitungskopf 29 gleichzeitig in beide Bewegungskomponenten steuerbar.

Unterhalb des Bearbeitungssteuerrings 13 ist die Kurvenscheibe 4 angeordnet, der mit dieser fest verbunden und drehbar an der Gestellsäule 26 gelagert ist. Diese Kurvenscheibe 4 wird vorzugsweise mit 120 Umdrehungen pro Minute von einem nicht dargestellten elektrischen Getriebemotor angetrieben. Es sind aber auch Antriebsdrehzahlen von 10 bis 250 Umdrehungen pro Minute möglich, um die Taktzeiten abzusenken oder zu erhöhen, soweit dies möglich oder erforderlich ist. Zum Antrieb und zur Steuerung der Werkstückaufnahme 9 sind dabei an der Unterseite der Kurvenscheibe 4 vorzugsweise drei Steuerkurvenelemente 5, 6, 7 vorgesehen, die durch drei umlaufende, in der Kurvenscheibe 4 eingelassene Nuten 32 ausgebildet sind, in die drei Vertikalrollen 33 der Werkstückaufnahme 9 drehbar gelagert und geführt sind. Die Vertikalrollen 33 sind an einer vertikal angeordneten Welle 34 befestigt, an der unterhalb der Vertikalrollen 33 die Werkstückaufnahmeplatte 14 und darunter das kleine Zahnrad 11 der Werkstückaufnahme 9 befestigt ist. Bei einer vereinfachten Ausführung ist auch eine Kurvenscheibe 4 mit nur zwei Steuerkurvenelementen denkbar, in die eine Werkstückaufnahme 9 mit nur zwei Vertikalrollen 33 geführt ist.

Die Werkstückaufnahmeplatte 14 ist mindestens oben als plane Fläche und mit rundem oder eckigem Flächenumfang ausgebildet und dient zur Aufnahme des zu montierenden oder zu bearbeitenden Werkstücks 15. Dabei ist die Werkstückaufnahmeplatte 14 drehbar an der Welle 34 und vertikal auf einer festen Lagerringplatte und einem Führungswagen 35 gelagert, so dass sich die Werkstückaufnahme 9 zwar tangential auf einer Kreisbahn um die Gestellsäule 26 bewegt, aber radial und axial fixiert ist.

Das kleine Zahnrad 11 ist unterhalb der Werkstückaufnahmeplatte 14 an der Welle 34 fest montiert, so dass bei einer von den Steuerkurvenelementen 5, 6, 7 erzeugten Drehbewegung der Welle 34 die Werkstückaufnahmen 9 auf einer Kreisbahn um die Gestellsäule 26 angetrieben wird. Dazu greift das kleine Zahnrad 11 als Antriebsrad kämmend in das fest an der Gestellsäule 26 montierte große Zahnrad 12 als gestellfestes Maschinenteil ein und wird dadurch um dessen Zahnkreis bewegt. Dabei kann die Umlaufgeschwindigkeit auch durch das Durchmesserverhältnis des kleinen zum großen Zahnraddurchmesser bestimmt werden, dessen Verhältnis vorzugsweise 1:5 bis 1:20 aufweist. Ein derartiger Antrieb kann auch durch zwei entsprechende Reibräder erfolgen.

Zur Zuführung von Werkstücken 15 oder deren Einzelteilen ist radial neben der Werkstückaufnahme 9 noch eine Vereinzelungsstation 23 angeordnet, deren grundsätzliche Ausbildung bereits zu Fig. 1 der Zeichnung erläutert wurde.

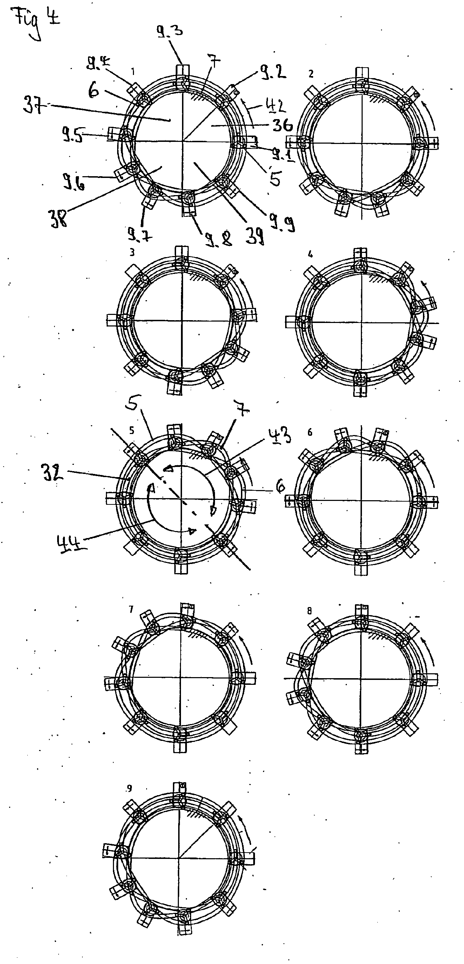

In Fig. 4 der Zeichnung sind neun Steuertaktzyklen bei einer Umdrehung der Kurvenscheibe 4 unter Berücksichtigung der drei vorgesehenen Steuerkurvenelemente 5, 6, 7 dargestellt. Dazu laufen unterhalb der acht Bearbeitungsstationen 2 neun Werkstückaufnahmen 9 planetenartig um, deren Umlaufgeschwindigkeit und deren jeweilige Position auch von der Ausbildung der drei Steuerkurvenelemente 5, 6, 7 abhängt. So ist auf allen Momentaufnahmen von Bild 1 bis Bild 9 erkennbar, dass die drei umlaufenden Steuerkurvenelemente 5, 6, 7 über verschiedene Abschnitte verfügen, bei denen die als Nuten 32 ausgeführten Steuerkurvenelemente 5, 6, 7 nahezu mit gleichem Abstand koaxial, mit zu oder abnehmenden Abständen zueinander und auch sich schneidende Bereiche aufweisen.

So verlaufen die Steuerkurvenelemente 5, 6, 7 in einem Koaxialbereich 44 von ca. 180° auf dem Rundschaltring 4 koaxial zueinander um die Maschinenachse 3 aber in unterschiedlichem Abstand von dieser. In diesem Koaxialbereich 44 verläuft das erste Steuerkurvenelement 5 außen, das dritte Steuerkurvenelement 7 innen und das zweite Steuerkurvenelement 6 dazwischen. Im anderen 180°-Bereich 43 verändern sich die Abstände der Steuerkurvenelement 5, 6, 7 von der Maschinenachse 3 und zueinander so, dass sie sich insgesamt sechsmal schneiden. Dabei verläuft das erste Steuerkurvenelement 5 in einem Bereich von 120° in kontinuierlich sich verkleinernden Abstand zur Maschinenachse 3, wobei es in einem Bereich von 120° den Abstand des dritten Steuerkurvenelements 7 erreicht und sich dann wieder kontinuierlich auf den äußeren Abstand vergrößert. In diesem anderen 180°-Bereich 43 vergrößert das zweite Steuerkurvenelement 6 seinen Abstand zur Maschinenachse 3 bis zu dem Abstand des ersten Steuerkurvenelements 5 im Koaxialbereich, um ihn dann wieder zu verringern auf einem Abstand des dritten Steuerkurvenelements 7 im Koaxialbereich und danach wieder den Abstand vergrößert bis auf den mittleren Abstand im Koaxialbereich. Hingegen vergrößert das dritte Steuerkurvenelement 7 seinen Abstand im anderen 180°-Bereich 43 kontinuierlich bis es nach ca. 90° den äußeren Abstand erreicht hat, um dann kontinuierlich am Ende des anderen 180°-Bereichs 43 wieder auf seinen ursprünglichen Abstand im Koaxialbereich 44 zurückzukehren. Durch diese Abstandsänderungen zur Maschinenachse 3 schneiden sich die drei Steuerkurvenelemente 5, 6, 7 im anderen 180°-Bereich 43 an sechs um ca. 30° versetzten Stellen.

Zur Veranlassung einer Drehrichtung sind die drei vertikalen Lagerrollen 33 der Werkstückaufnahme 9 im gleichen Abstand und 120° versetzt zur Welle 34 in den Steuerkurvenelementen 5, 6, 7 geführt angeordnet. Dadurch wird bei einer mit gleichem Abstand koaxialen Anordnung der drei Steuerkurvenelemente 5, 6, 7 erreicht, dass die Werkstückaufnahme 9 auch bei rotierender Kurvenscheibe 4 still steht, was immer bei Erreichen der Position unterhalb einer Bearbeitungsstation 2 vorgesehen ist. Dies ist im Zeitpunkt von Bild 1 insbesondere für die drei Werkstückaufnahmen 9.1., 9.2, 9.3 im ersten Quadranten 36 der Fall, da in diesem Kurvenscheibenbereich die drei Steuerkurvenelemente 5, 6, 7 etwa mit gleichem Abstand koaxial verlaufen oder einen gleichbleibenden Abstand voneinander haben.

Erst im zweiten 37, dritten 38 und vierten Quadranten 39 verändern sich die Abstände der Steuerkurvenelemente 5, 6, 7 voneinander und schneiden sich sechsmal miteinander, so dass sich die sternförmig angeordneten Vertikalrollen 33 mit ihrer Vertikalrollenhalterung 40 um deren eigene Längsachse 10 als Drehachse drehen. Dadurch wird gleichzeitig die Welle 34 mit dem daran befestigten kleineren Zahnrad 11 der Werkstückaufnahmen 9.4, 9.5, 9.6, 9.7, 9.8, 9.9 um dessen Längsachse 10 gedreht und damit entlang des Zahnkranzes des großen Zahnrades 12 bewegt.

Aus den Momentaufnahmen nach Bild 1 bis 9 bei einer Umdrehung der Kurvenscheibe 4 ist ersichtlich, dass dabei die einzelnen Werkstückaufnahmen 9.1 bis 9.9 um ca. 45° oder eine Bearbeitungsstation 9 kontinuierlich weiterbewegt werden. Durch diese sich kontinuierlich ändernden Steuerkurvenabstände treten auch nur sich kontinuierlich ändernde Antriebsbeschleunigungen an den Werkstückaufnahmen 9 auf, wodurch weitgehend gegenläufige Massenträgheitsmomente vermieden werden, so dass die antreibende Kurvenscheibe 4 mit einer Umlaufdrehzahl von 120 Umdrehungen pro Minute betreibbar ist, ohne dass an der Rundtaktmaschine taktbedingte Vibrationen oder Erschütterungen auftreten. Deshalb sind mit einer derartigen Rundtaktmaschine Taktfrequenzen von 120 Takten pro Minute für eine gesicherte Montage möglich. Ein Umlauf und damit ein Montagevorgang ist mit einer derartigen Rundtaktmaschine in ca. vier Sekunden ausführbar.

Durch den mit der Kurvenscheibe 4 gekoppelten Bearbeitungssteuerring 13 ist gleichzeitig auch der Antrieb der Bearbeitungsstationen 2 und damit die synchrone Steuerrung der Montagevorgänge möglich. So ist durch den Bearbeitungssteuerring 13 mit seinen beiden Kurvennuten 18, 20 der Bearbeitungskopf 29 jeder Bearbeitungsstation 2 gleichzeitig horizontal und vertikal bewegbar, um die Werkstücke 15 auf der Werkstückaufnahme 9 zu greifen, zu montieren oder zu bearbeiten. Dazu ist wie zu Fig. 1 der Zeichnung beschrieben auf der vertikalen Mantelfläche des Bearbeitungssteuerungsrings 13 eine umlaufende erste Kurvennut 18 als vertikales erstes Steuerelement eingelassen, in die eine horizontale Lagerrolle 31 der Bearbeitungsstation 2 geführt ist. Diese umlaufende erste Kurvennut 18 verläuft in einem etwa 90°-Abschnitt horizontal gradlinig am oberen Rand des Bearbeitungssteuerungsrings 13 und knickt dann leicht schräg nach unten ab, um dann nahe dem unteren Rand des Bearbeitungssteuerrings 13 horizontal zu verlaufen. Daraufhin folgt dann wieder ein nach oben abknickender Kurvennutabschnitt, der dann wieder in den zweiten horizontal gradlinig verlaufenden einmündet, so dass bei einer Umdrehung zwei obere gradlinig verlaufende Abschnitte und zwei untere gradlinig verlaufende Abschnitte durchfahren werden. Dadurch werden alle acht Bearbeitungsstationen 2 mit ihren Bearbeitungsköpfen 29 bei einer Umdrehung zwischen zwei oberen und zwei unteren Punkten nahe der Werkstückaufnahme 9 kontinuierlich auf und ab bewegt. Dabei ist diese erste Kurvennut 18 so ausgebildet, dass die Absenkung so erfolgt, dass sich in diesem Zeitraum unter dem Bearbeitungskopf 29 zeitgleich die Werkstückaufnahme 9 zum Montageprozess befindet.

Zusätzlich enthält der Bearbeitungssteuerring 13, wie zu Fig. 2 der Zeichnung beschrieben, auf seiner oberen Deckfläche 19 eine zweite Kurvennut 20 als horizontal erstes Steuerelement, in die eine vertikale Lagerrolle 28 der Bearbeitungsstation 2 horizontal geführt wird. Durch diese zweite Kurvennut 20 ist die horizontale oder radiale Bewegungskomponente des Bearbeitungskopfes 29 aller Bearbeitungsstationen 2 während der Rotation des Bearbeitungssteuerrings 13 gleichzeitig steuerbar. Bei der vorliegenden Ausführung der zweiten Kurvennut 20 erstreckt sich diese in einem Bereich von ca. 90° nahe beabstandet und mit konstantem Abstand entfernt von der Gestellsäule 26 entfernt. Danach verläuft die zweite Kurvennut 20 mit einem erweiterten Radius in einem Bereich von ca. 120° konstant beabstandet nahe dem äußeren Rand des Bearbeitungssteuerungsrings 13, um dann wieder radial zurück zum inneren Abschnitt zu verlaufen. Der Bearbeitungskopf 29 wird dadurch während einer Umdrehung zwischen einem radial inneren Punkt oberhalb der Werkstückaufnahme 9 und einem radial äußeren Punkt oberhalb der Vereinzelungsstation 23 horizontal und radial verschoben. Dabei sind die beiden Kurvennuten 18, 20 zueinander so angeordnet, dass der Bearbeitungskopf 29 während einer Umdrehung des Bearbeitungssteuerungsrings 13 wie in Fig. 1 der Zeichnung dargestellt einmal zur Vereinzelungsstation 23 abgesenkt wird und dabei ein Werkstück 15 oder Werkstückteil aufnimmt. Danach wird der Bearbeitungskopf 29 durch die ansteigende erste Kurvennut 18 nach oben und gleichzeitig durch die zweite Kurvennut 20 radial nach innen bewegt. Anschließend wird dann der Bearbeitungskopf 29 durch die wiederum abfallende erste Kurvennut 18 wieder zur Werkstückaufnahme 9 abgesenkt und dort das Werkstück 15 abgesetzt, montiert oder eingesteckt. Durch eine derartige Kurvensteuerung wird bei jeder Umdrehung der Kurvenscheibe 4 und des Bearbeitungssteuerungsrings 13 nacheinander auf jeder nachfolgenden Werkstückaufnahme 9 ein Werkstückteil hinzugefügt. Durch abweichende oder zusätzliche Kurvenverläufe der beiden Kurvennuten 18, 19 sind auch andere Montage- oder Bearbeitungsvorgänge steuerbar.

Bei einer vereinfachten Ausführungsform der Rundtaktmaschine kann in die Kurvenscheibe 4 auch der Bearbeitungssteuerring 13 integriert sein, in dem die Steuerkurvenelemente 5, 6, 7 in die nach unten gerichtete Deckfläche der Kurvenscheibe 4 eingelassen sind, während an der äußeren Mantelfläche die erste Kurvennut 18 und an der oberen Deckfläche 19 die zweite Kurvennut 20 eingelassen wird. Dabei können die Steuerkurvenelemente 5, 6, 7 als auch die horizontalen und vertikalen ersten Steuerelemente 18, 20 auch als Führungsschienen, Kurvenscheiben oder dergleichen ausgebildet sein.

Bei einer weiteren besonderen Ausführung ist es auch denkbar, in die Kurvenscheibe 4 den Kurvenscheibenring 22 zu integrieren, indem an der äußeren Mantelfläche ein entsprechendes Ringelement mit unterschiedlichem Abstand zur Drehachse oder Maschinenachse 3 angeordnet und von einer anderen Rolle abgetastet wird.

## Patentansprüche

1. Rundtaktmaschine, die aufweist:
- ein ortsfestes Maschinengestell (1),
- eine Mehrzahl von am Maschinengestell (1) angeordneten Bearbeitungs- oder Montagestationen (2) für Werk- oder Montagestücke (15),
- ein Rundelement (4), das zumindest teilweise innerhalb des Maschinengestells (1) angeordnet und um eine vertikale oder horizontale Maschinenachse (3) drehbar ist,
- mindestens zwei Steuerkurvenelemente (5, 6, 7), die durchgehend um die Maschinenachse (3) angeordnet sind und zur Maschinenachse (3) teilweise in koaxial unterschiedlichem aber gleichbleibenden Abstand, und teilweise in sich änderndem Abstand verlaufen
- mehrere Werkstückaufnahmen (9) für die Werk- oder Montagestücke (15), wobei die Werkstückaufnahmen (9) auf dem Rundelement(4) planetenartig um die Maschinenachse (3) anordnet sind und jeweils ein Werkstückaufnahmeelement (14) und mindestens zwei beabstandete Lagerelemente (8) enthalten und wobei die Lagerelemente (8) entlang der Steuerkurvenelemente (5, 6, 7) so geführt werden, dass bei einer Rotation des Rundelementes (4) sich die Werkstückaufnahmeelemente (14) jeweils um die mit den Lagerelementen (8) gemeinsame Drehachse (10) drehen,
**dadurch gekennzeichnet, dass** die mindestens zwei Steuerkurvenelemente (5, 6, 7) auf dem Rundelement (4) angeordnet sind, dass das Werkstückaufnahmeelement (14) axial über einen Führungswagen (35) und durch eine gestellfeste Lagerringplatte in einer horizontalen Lage gehalten ist, dass das Werkstückaufnahmeelement (14) durch den Führungswagen (35) in seiner Ausrichtung zur Maschinenachse (3) fixiert ist und dass die Werkstückaufnahmen (9) jeweils ein kleines Antriebsrad (11) enthalten, über das die Werkstückaufnahmen (9) mit einem gestellfesten Maschinenteil gekoppelt sind.

2. Rundtaktmaschine nach Anspruch 1, **dadurch gekennzeichnet, dass** die Steuerkurvenelemente (5, 6, 7) zur Maschinenachse (3) teilweise sich schneidend verlaufen.

3. Rundtaktmaschine nach Anspruch oder 2, **dadurch gekennzeichnet, dass** das Rundelement als Kurvenscheibe (4) ausgebildet ist, in dessen mindestens einer horizontalen Ringfläche drei nutenförmige Steuerkurvenelemente (5, 6, 7) eingelassen sind, die durchgehend um die Maschinenachse (3) verlaufen, dass die drei Steuerkurvenelemente (5, 6, 7) in einem Winkelbereich (44) als Koaxialbereich von ca. 180° koaxial gleich beabstandet um die Maschinenachse (3) verlaufen und dass im restlichen Bereich als anderen 180°-Bereich (43) sich ihre radialen Abstände kontinuierlich gegeneinander verändern und sechsmal schneiden.

4. Rundtaktmaschine nach einem der Anspruch 2 der 3, **dadurch gekennzeichnet, dass** das erste Steuerkurvenelement (5) im Koaxialbereich (44) bei gleichbleibendem Abstand außen verläuft und dann in Drehrichtung (42) ein Bereich von ca. 120° in einem kontinuierlich verkleinerten Abstand zur Maschinenachse (3) verläuft, der mindestens den Abstand des inneren dritten Steuerkurvenelements (7) entspricht und sich dann wieder kontinuierlich auf den äußeren Abstand vergrößert, während sich der Abstand des im Koaxialbereich (44) mittleren zweiten Steuerkurvenelements (6) seinen Abstand zur Maschinenachse (3) kontinuierlich auf den Durchmesser des äußeren ersten Steuerkurvenelements (5) vergrößert und dann wieder zum mittleren Durchmesser kontinuierlich verkleinert und dabei das erste Steuerkurvenelement (5) innerhalb des 120°-Bereichs zweimal schneidet, während sich der Abstand des im Koaxialbereich (44) inneren dritten Steuerkurvenelements (7) im anderen 180°-Bereich (43) auch seinen Abstand zur Maschinenachse (3) mit einer Phasenverschiebung von ca. 45° zum zweiten Steuerkurvenelement (6) auf einem Durchmesser des äußeren ersten Steuerkurvenelements (5) vergrößert und wieder auf den Abstand im Koaxialbereich verringert und dabei zunächst im anderen 180°-Bereich (43) das erste Steuerkurvenelement (5) und dann das zweite Steuerkurvenelement (6) und danach wieder das erste Steuerkurvenelement (5) und daraufhin nochmals das zweite Steuerkurvenelement (6) schneidet.

5. Rundtaktmaschine nach einem der Ansprüche 1 bis 4, **dadurch gekennzeichnet, dass** die Werkstückaufnahme (9) mindestens eine flache Werkstückaufnahmeplatte (14) als Werkstückaufnahmeelement aufweist, die horizontal angeordnet ist und die eine vertikale Welle (34) enthält, an dessen einem Ende als Lagerelement (8) drei um 120° versetzt angeordnete Vertikalrollen (33) drehbar befestigt sind, und dass die Vertikalrollen (33) in die drei Steuerkurvenelemente (5, 6, 7) der Kurvenscheibe (4) eingreifen und am anderen Ende der Welle (34) als Antriebsrad ein kleines Zahnrad (11) befestigt ist, das mit einem großen Zahnrad (12) als gestellfestes Maschinenteil kämmend gekoppelt ist.

6. Rundtaktmaschine nach Anspruch 1 bis 5, **dadurch gekennzeichnet, dass** das Maschinengestell (1) eine vertikale, ortsfeste Gestellsäule (26) enthält, an der mindestens das Rundelement (4) drehbar gelagert und mit einem Antriebsmotor antriebsmäßig gekoppelt ist.

7. Rundtaktmaschine nach Anspruch 6, **dadurch gekennzeichnet, dass** am Maschinengestell (1) zusätzlich noch mindestens ein Bearbeitungssteuerring (13) drehbar angeordnet ist, der so mit dem Antriebsmotor oder dem Rundelement (4) gekoppelt ist, dass er synchron mit dem Rundschaltring (4) umläuft.

8. Rundtaktmaschine nach Anspruch 6 oder 7, **dadurch gekennzeichnet, dass** der Rundschaltring (4) oder der Bearbeitungssteuerring (13) mindestens auf einer horizontalen Fläche (19) ein zusätzliches horizontales erstes Steuerelement (20) und auf mindestens einer vertikalen Umfangsfläche (17) ein vertikales erstes Steuerelement (18) aufweist und
dass das horizontal erste Steuerelement (20) die horizontale Bewegungskomponente und das vertikale erste Steuerelement (18) gleichzeitig die vertikale Bewegungskomponente der Bearbeitungsstationen (2) gesteuert antreibt.

9. Rundtaktmaschine nach Anspruch 7 oder 8, **dadurch gekennzeichnet, dass** das Rundelement (4) oder eine am Maschinengestell (1) noch zusätzlich angeordneter Kurvenscheibenring (22) noch ein zusätzliches zweites vertikales oder zweites horizontales Steuerelement (24) enthält, das zur Steuerung und zum Antrieb mindestens einer zusätzlichen Vereinzelungs (23) oder Bearbeitungsstation (2) dient.

## Claims

1. Rotary machine, which has:
- a stationary machine frame (1),
- a plurality of machining or mounting stations (2), mounted on the machine frame (1), for workpieces or pieces to be mounted (15),
- a circular element (4), which is at least partly arranged within the machine frame (1) and can be rotated about a vertical or horizontal machine axis (3),
- at least two control cam elements (5, 6, 7), which are arranged continuously around the machine axis (3) and run partly at a coaxially different but constant distance and partly at a changing distance with respect to the machine axis (3),
- a plurality of workpiece holders (9) for the workpieces or pieces to be mounted (15), the workpiece holders (9) being arranged on the circular element (4) around the machine axis (3) in the manner of planets and each containing a workpiece holding element (14) and at least two mutually spaced bearing elements (8), and the bearing elements (8) being guided along the control cam elements (5, 6, 7) in such a way that, during a rotation of the circular element (4), the workpiece holding elements (14) each rotate about the axis of rotation (10) that is common with the bearing elements (8), **characterized in that** the at least two control cam elements (5, 6, 7) are arranged on the circular element (4), **in that** the workpiece holding element (14) is held axially above a guide carriage (35) and in a horizontal position by a bearing ring plate that is fixed to the frame, **in that** the workpiece holding element (14) is fixed in its alignment with respect to the machine axis (3) by the guide carriage (35), and **in that** the workpiece holders (9) each contain a small drive wheel (11), via which the workpiece holders (9) are coupled to a machine part fixed to the frame.

2. Rotary machine according to Claim 1, **characterized in that** the control cam elements (5, 6, 7) run with respect to the machine axis (3) in a partly intersecting manner.

3. Rotary machine according to Claim 1 or 2, **characterized in that** the circular element is formed as a cam disc (4), in the at least one horizontal annular surface of which three groove-like control cam elements (5, 6, 7) are inlaid, which run continuously around the machine axis (3), **in that** the three control cam elements (5, 6, 7) run around the machine axis (3) spaced coaxially apart equally in an angular region (44) as a coaxial region of about 180°, and **in that**, in the remaining region, as another 180° region (43), their radial distances from one another change continuously and intersect six times.

4. Rotary machine according to either of Claims 2 and 3, **characterized in that** the first control cam element (5) runs on the outside at a constant distance in the coaxial region (44) and then, in the direction of rotation (42), a region of about 120° runs at a continuously reduced distance from the machine axis (3), which corresponds at least to the distance of the inner, third control cam element (7), and then increases continuously again to the outer distance, while the distance of the middle, second control element (6) in the coaxial region (44) increases its distance from the machine axis (3) continuously to the diameter of the outer, first control cam element (5) and then decreases continuously again to the central diameter and, in the process, intersects the first control element (5) twice within the 120° region, while the distance of the inner, third control cam element (7) in the coaxial region (44) also changes its distance from the machine axis (3) in the other 180° region (43) with a phase shift of about 45° with respect to the second control cam element (6) to a diameter of the outer, first control cam element (5), and decreases again to the distance in the coaxial region and, in the process, firstly intersects the first control cam element (5) in the other 180° region (43) and then the second control cam element (6) and, after that, intersects the first control cam element (5) again and then the second control cam element (6) once more.

5. Rotary machine according to one of Claims 1 to 4, **characterized in that** the workpiece holder (9) has at least one flat workpiece holding plate (14) as a workpiece holding element, which is arranged horizontally and which contains a vertical shaft (34), at one end of which three vertical rollers (33) offset by 120° are arranged such that they can rotate as a bearing element (8), and **in that** the vertical rollers (33) engage in the three control cam elements (5, 6, 7) of the cam disc (4), and at the other end of the shaft (34) there is fixed a small gear wheel (11) as a drive wheel, which is coupled in an intermeshing manner with a large gear wheel (12) as a machine part fixed to the frame.

6. Rotary machine according to Claims 1 to 5, **characterized in that** the machine frame (1) contains a vertical, stationary frame column (26), on which at least the circular element (4) is mounted such that it can rotate and is coupled in drive terms to a drive motor.

7. Rotary machine according to Claim 6, **characterized in that** at least one machining control ring (13) is additionally arranged on the machine frame (1) such that it can rotate and is coupled to the drive motor or the circular element (4) such that it revolves synchronously with the circular control ring (4).

8. Rotary machine according to Claim 6 or 7, **characterized in that** the circular control ring (4) or the machining control ring (13) has an additional horizontal first control element (20), at least on a horizontal surface (19), and a vertical first control element (18) on at least one vertical circumferential surface (17), and
**in that** the horizontal first control element (20) drives the horizontal movement component, and the vertical first control element (18) simultaneously drives the vertical movement component of the machining stations (2) in a controlled manner.

9. Rotary machine according to Claim 7 or 8, **characterized in that** the circular element (4) or a cam disc ring (22) additionally further arranged on the machine frame (1) further contains an additional second vertical or second horizontal control element (24), which is used to control and to drive at least one additional separating station (23) or machining station (2).

## Revendications

1. Machine cadencée circulaire, qui comprend:
- un bâti de machine stationnaire (1) ;
- une pluralité de stations de traitement ou de montage (2) agencées sur le bâti de machine (1) pour des pièces à usiner ou à monter (15) ;
- un élément circulaire (4) qui est agencé au moins partiellement à l'intérieur du bâti de machine (1) et peut tourner autour d'un axe vertical ou horizontal (3) de la machine ;
- au moins deux éléments de came (5, 6, 7) qui sont agencés directement autour de l'axe (3) de la machine et s'étendent en direction de l'axe (3) de la machine en partie à une distance différente mais constante et en partie à une distance variable ;
- plusieurs logements de pièces à usiner (9) pour les pièces à usiner ou à monter (15), étant entendu que les logements de pièces à usiner (9) sont agencés sur l'élément circulaire (4) de façon planétaire autour de l'axe (3) de la machine et contiennent chacun un élément de logement de pièce à usiner (14) et au moins deux éléments de support (8) écartés l'un de l'autre et étant entendu que les éléments de support (8) sont guidés le long des éléments de came (5, 6, 7) de telle sorte que lors d'une rotation de l'élément circulaire (4), les éléments de logement de pièce à usiner (14) tournent respectivement autour de l'axe de rotation (10) commun avec les éléments de support (8),
**caractérisée en ce que** les au moins deux éléments de came (5, 6, 7) sont agencés sur l'élément circulaire (4), **en ce que** l'élément de logement de pièce à usiner (14) est maintenu axialement par le biais d'un chariot de guidage (35) et au moyen d'une plaque de bague de roulement fixée au bâti dans une position horizontale, **en ce que** l'élément de logement de pièce à usiner (14) est fixé dans son orientation par rapport à l'axe (3) de la machine au moyen du chariot de guidage (35) et **en ce que** les logements de pièces à usiner (9) contiennent chacun une petite roue d'entraînement (11) au moyen de laquelle les logements de pièce à usiner (9) sont couplés avec une partie de la machine fixée au bâti.

2. Machine cadencée circulaire selon la revendication 1, **caractérisée en ce que** les éléments de came (5, 6, 7) s'étendent en direction de l'axe (3) de la machine en s'entrecoupant partiellement.

3. Machine cadencée circulaire selon la revendication 1 ou 2, **caractérisée en ce que** l'élément circulaire est réalisé comme disque à cames (4) dans l'au moins une surface annulaire horizontale duquel sont réalisés trois éléments de came (5, 6, 7) en forme de gorges qui s'étendent directement autour de l'axe (3) de la machine, **en ce que** les trois éléments de came (5, 6, 7) s'étendent dans une zone d'angle (44) étant une zone coaxiale d'environ 180° à une distance coaxiale identique autour de l'axe (3) de la machine et **en ce que** dans la zone résiduelle étant une autre zone de 180° (43), leurs distances radiales varient continuellement l'une par rapport à l'autre et s'entrecoupent six fois.

4. Machine cadencée circulaire selon l'une des revendications 2 ou 3, **caractérisée en ce que** le premier élément de came (5) s'étend à l'extérieur dans la zone coaxiale (44) avec une distance constante, puis dans la direction de rotation (42), une zone d'environ 120° s'étend à une distance diminuant continuellement par rapport à l'axe (3) de la machine qui correspond au moins à la distance du troisième élément de came (7) intérieur et augmente ensuite à nouveau continuellement jusqu'à la distance extérieure, tandis que la distance du deuxième élément de came (6) médian dans la zone coaxiale (44) augmente continuellement sa distance par rapport à l'axe (3) de la machine jusqu'au diamètre du premier élément de came (5) extérieur, puis diminue à nouveau continuellement en direction du diamètre médian, et ce faisant, s'entrecoupe deux fois avec le premier élément de came (5) à l'intérieur de la zone de 120°, tandis que la distance du troisième élément de came (7) intérieur dans la zone coaxiale (44), dans l'autre zone de 180° (43), augmente également sa distance par rapport à l'axe (3) de la machine avec un décalage de phase d'environ 45° par rapport au deuxième élément de came (6) jusqu'à un diamètre du premier élément de came (5) extérieur et la diminue à nouveau jusqu'à la distance dans la zone coaxiale, et ce faisant, s'entrecoupe d'abord dans l'autre zone de 180° (43) avec le premier élément de came (5), puis avec le deuxième élément de came (6), puis ensuite à nouveau avec le premier élément de came (5) et enfin une nouvelle fois avec le deuxième élément de came (6).

5. Machine cadencée circulaire selon l'une des revendications 1 à 4, **caractérisée en ce que** le logement de pièce à usiner (9) présente au moins un plateau plat de logement de pièce à usiner (14) en tant qu'élément de logement de pièce à usiner, lequel est agencé horizontalement et contient un arbre vertical (34) à l'extrémité duquel trois cylindres verticaux (33) agencés en décalage de 120° sont fixés de façon rotative en tant qu'élément de support (8), et **en ce que** les cylindres verticaux (33) s'engagent dans les trois éléments de came (5, 6, 7) du disque à cames (4), et à l'autre extrémité de l'arbre (34), une petite roue dentée (11) est fixée en tant que roue d'entraînement, laquelle est couplée avec une grande roue dentée (12) en peignage en tant que partie de machine fixée au bâti.

6. Machine cadencée circulaire selon l'une des revendications 1 à 5, **caractérisée en ce que** le bâti de machine (1) contient une colonne de bâti verticale stationnaire (26), sur laquelle au moins l'élément circulaire (4) est monté de façon rotative et couplé en entraînement avec un moteur d'entraînement.

7. Machine cadencée circulaire selon la revendication 6, **caractérisée en ce qu'**en complément, au moins une bague de commande de traitement (13) est agencée de façon rotative sur le bâti de machine (1), laquelle est couplée avec le moteur d'entraînement ou l'élément circulaire (4) de telle sorte qu'elle tourne de façon synchrone avec la bague de commutation circulaire (4).

8. Machine cadencée circulaire selon la revendication 6 ou 7, **caractérisée en ce que** la bague de commutation circulaire (4) ou la bague de commande de traitement (13) présente au moins sur une surface horizontale (19) un premier élément de commande horizontal supplémentaire (20) et sur au moins une surface périphérique verticale (17) un premier élément de commande vertical (18), et **en ce que** le premier élément de commande horizontal (20) entraîne en commande les composants de mouvement horizontaux et le premier élément de commande vertical (18) entraîne en même temps en commande les composants de mouvement verticaux des stations de traitement (2).

9. Machine cadencée circulaire selon la revendication 7 ou 8, **caractérisée en ce que** l'élément circulaire (4) ou une bague de disque à cames (22) agencée en complément sur le bâti de machine (1) contient encore un deuxième élément de commande vertical ou horizontal supplémentaire (24), qui sert à la commande et à l'entraînement d'au moins une station d'individualisation (23) ou de traitement (2) supplémentaire.
